# EUROPEAN PATENT SPECIFICATION

(11) **EP 2 232 177 B1**
(45) Date of publication and mention of the grant of the patent: **23.03.2022**
(21) Application number: 08860345.1
(22) Date of filing: 10.12.2008
(51) Int. Cl.: F25D 23/02, F25D 23/12

(54) **REFRIGERATOR DOOR WITH EXTERIOR COMPONENTS**
KÜHLSCHRANKTÜR MIT AUSSENKOMPONENTEN
PORTE DE RÉFRIGÉRATEUR AVEC DES COMPOSANTS EXTÉRIEURS

(30) Priority: 12.12.2007 KR 20070129128
(43) Date of publication of application: 29.09.2010
(73) Proprietor: LG Electronics, Inc., Yeongdeungpo-gu Seoul 07336 (KR)
(72) Inventor: KOO, Ja-Hun, Gyoungsangnam-do 641-711 (KR)
(74) Representative: Plasseraud IP
(86) International application number: PCT/KR2008/007317
(87) International publication number: WO 2009/075524

(56) References cited:
- WO-A1-2004/104502
- JP-A- 2006 175 742
- KR-A- 20050 077 581
- KR-U- 19990 020 189
- KR-Y1- 200 125 640
- US-A- 2 512 961
- US-A1- 2002 146 586
- US-A1- 2006 144 075

## Description

### Technical Field

The invention relates to a refrigerator door having exterior components.

### Background Art

In general, the exteriors of home appliances such as a refrigerator, an air-conditioner,a washing machine, and an oven are formed of a plastic or metal material. Such home appliances are described for instance in US 2 521 961 (A), US 2006/144075 (A1) and WO 2004/104502 (A1). Recently, such a home appliance has various colors, patterns and textures in order to cater to consumer's various needs and propensities.

The exterior of the home appliance may be formed of materials different from each other. That is, one portion of the exterior of the home appliance may be formed of the metal material, and the other portion of the exterior may be formed of the plastic material.

### Disclosure of Invention

### Technical Problem

The invention provides a refrigerator door in which the same texture can be visualized at a variety of different materials to improve a sense of beauty when the exterior of the refrigerator door is formed of the different materials.

### Technical Solution

According to the invention, there is provided a refrigerator door as defined in claim 1.

### Advantageous Effects

According to the proposed embodiments, since the exterior components formed of materials different from each other constitute a portion of the exterior of the refrigerator door, and also are visualized as the same texture, a sense of beauty of the refrigerator door can improved.

### Brief Description of the Drawings

FIG. 1 is a front view of a refrigerator to which an exterior component of a refrigerator door applied according to an embodiment of the invention.
FIG. 2 is an exploded perspective view illustrating a dispenser of a refrigerator, the dispenser constituting a portion of the exterior of a refrigerator door according to an embodiment of the invention.
FIG. 3 is a longitudinal sectional view of a second exterior component of a refrigerator door according to an embodiment of the invention.
FIG. 4 is a block diagram illustrating a process of fabricating a second exterior component according to an embodiment of the invention.

### Mode for the Invention

Reference will now be made in detail to the embodiments of the present invention, examples of which are illustrated in the accompanying drawings.

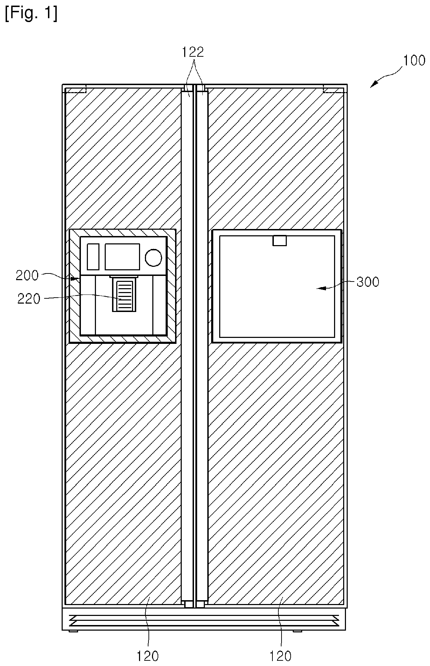

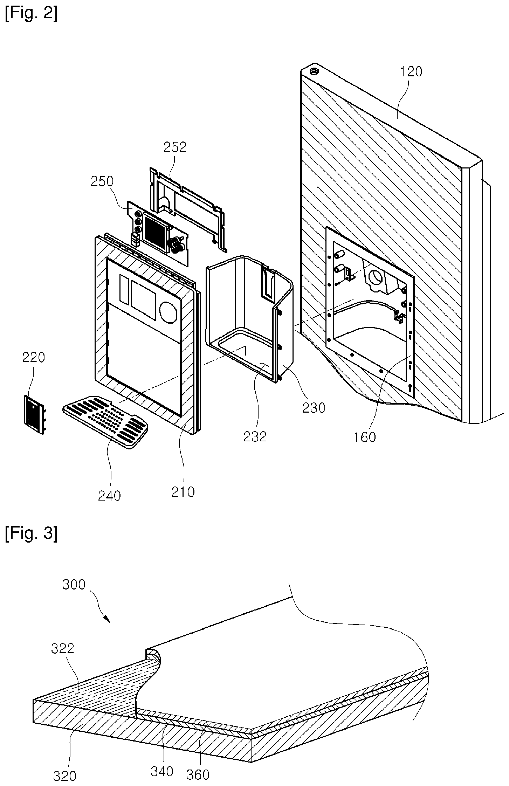

FIG. 1 is a front view of a refrigerator to which an exterior component of a refrigerator door applied according to an embodiment, and FIG. 2 is an exploded perspective view illustrating a dispenser of a refrigerator, the dispenser constituting a portion of the exterior of a refrigerator door according to an embodiment.

Referring to FIGS. 1 and 2, the exterior of a refrigerator 100 a body and a door 120 coupled to the body.

For example, at least portions of the body and the door 120 may be formed of a metal material such as a stainless steel (STS) plate to use natural texture of metal, i.e., STS for an exterior image.

The exterior components formed of the metal material are referred to as a first exterior component. Hairlines are disposed on a portion of the exterior of the exterior component. A surface form or pattern of the first exterior component refers to as a surface pattern.

The door 120 additionally includes exterior components such as a dispenser 200 and a home bar 300 for user's convenience.

The dispenser 200 and possibly, the home bar 300 are formed of a plastic material. In this embodiment, the dispenser 200 and the home bar 300 are processed and fabricated such that they have the same texture (surface pattern) as the first exterior component.

The body includes an exterior component such as a hinge cover 140 receiving a hinge to rotatably couple the door 120 to the body. The exterior component has texture corresponding to that of the first exterior component.

That is, in this embodiment, the exterior components, which constitute the exterior of the refrigerator, formed of materials different from each other may be fabricated such that the exterior components are visualized as the same texture to achieve an entirely unified exterior image.

Hereinafter, among the above-described exterior components, the dispenser 200 that is an exterior component constituting a portion of a front exterior of the refrigerator door 120 of the invention will be described. Descriptions with respect to the dispenser 200 may additionally, apply to other exterior components such as the home bar 300 and the hinge cover.

Referring to FIG. 2, the dispenser 200 is installed in a dispenser mounting part 160 provided in the door. The dispenser 200 includes a rear bracket 230 providing a space for dispensing water or ice, a dispenser frame 210 disposed in a front direction of the rear bracket 230 to define the exterior of the dispenser 200, and an electronic part 250 disposed in a rear direction of the dispenser frame 210. The electronic part 250 is protected by an electronic part cover 252.

The rear bracket 230 includes a push button 220 which is pushed by a user in order to dispense the ice or the water. The rear bracket 230 includes a gutter mounting part 232 in which a gutter 240 for collecting the water or ice when the dispensed ice or water drops is installed.

For example, the push button 220, the gutter 240, and the dispenser frame 210 may be formed of the plastic material and constitute some of the exterior components defining the exterior of the refrigerator door. The exterior components formed of the plastic material are referred to as a second exterior component.

For example, the second exterior component may be fabricated using an injection process. Hairline patterns are formed using an injection molding technology such that the second exterior component has the same texture as the first exterior component formed of the metal material in the injection process.

FIG. 3 is a longitudinal sectional view of a second exterior component.

Referring to FIG. 3, the second exterior component (the push button 220, the gutter, and the dispenser frame 210) includes a base 320, a colored layer 340, and a protection layer 360. The base 320 is fabricated using the injection molding technology. A surface of the base 320 is plated or deposited to form the colored layer 340. A surface of the colored layer 340 is coated or printed to form the protection layer 360.

In detail, a coupling position and an entire configuration of the base 320 are decided according to its installation position at which the base 320 is installed in the door 120 and its function. The decided configuration is reflected in a mold. Then, a fluid prepared by heating a plastic material is injected into the mold, and then is cooled to fabricate the base 320.

A hairline part 322 is provided on a portion of the base 320 exposed to the outside in a state where the door 120 is installed.

That is, provided is the hairline part 322 having shapes corresponding to those of the hairline patterns formed of the metal material that is the material of the first exterior component, e.g., the STS material. For this, a process for forming the hairline patterns is also performed on only a portion of the mold corresponding to the hairline part 322.

Of course, the hairline part 322 may be provided on an entire surface of the base 320. The colored layer 340 is further provided on the surface of the case 320. The plating process is performed on the surface of the base 320 using a pigment having a texture corresponding to that of the first exterior component, or the deposition process is performed on the surface of the base 320 using a coating film having a texture corresponding to that of the first exterior component to the colored layer 340 to form the colored layer 340.

A clear pigment is coated on a surface of the colored layer 340, or a protection film is deposited on the surface of the colored layer 340 to further form the protection layer 360, thereby fabricating the exterior component.

Hereinafter, a process of fabricating the second exterior component will be described in detail.

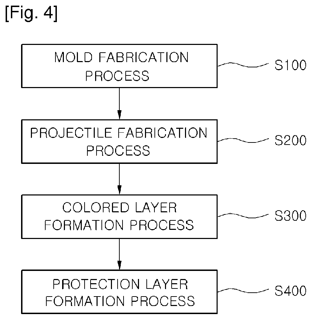

FIG. 4 is a block diagram illustrating a process of fabricating a second exterior component according to an embodiment.

Referring to FIG. 4, in order to fabricating a second exterior component, a mold fabrication process is performed in operation S100. In the mold fabrication process (S100), a mold having a shape corresponding to that of a base 320 to be formed is fabricated.

Also, in the mold fabrication process (S100), an upper mold and a lower mold are formed to provide an entire configuration of the base 320 according to a position at which the base 320 is installed on the first exterior component of the door and a shape of the base 320.

A hairline formation process is performed to form the hairline part 322 on the base to be formed on inner surfaces of the upper mold and the lower mold.

That is, in the hairline formation process, striations are formed on the inner surfaces of the molds such that the base has the texture corresponding to that of the first exterior component.

The mold fabrication process is completed in operation S100, a projectile fabrication process in which a melted plastic material is injected into the molds, and then is cooled , is performed in operation S200. As a result, the base 320 including the hairline part 322 having hairline patterns corresponding to those of the first exterior component on a portion of a surface thereof is formed.

After the base 320 is formed, a colored layer formation process is performed using a pigment or a coating film on the surface of the base 320 such that the base 320 has the same texture as that of the first exterior component in operation S300.

That is, in the colored layer formation process (S300), the base 320 is immersed into the pigment having the same color tone as that of the first exterior component to plate the pigment onto the surface of the base 320, or the coating film having the same color tone as that of the first exterior component is deposited onto the surface of the base 320 to form a colored layer 340.

Since the colored layer 340 is formed along a surface of the hairline part 322 formed on the base 320, it is not necessary to perform a process in which separate hairline patterns are formed on the colored layer 340 formed on the base 320.

After the colored layer 340 is formed, a protection layer formation process is performed using a clear pigment or a protection film to form a protection layer 360 in operation S400.

That is, in the protection layer formation process (S400), a coating layer is formed to prevent the colored layer 340 from being damaged from an external impact and scratched. Here, the clear pigment may be coated on an outer surface of the colored layer 340, or the protection film may be printed on the colored layer 340.

When the second exterior component formed as the above-described is installed on the first exterior component, the hairline part 322 is disposed on a portion constituting the exterior thereof. Thus, due to the hairline part 322 and the colored layer 340, the second exterior component and the first exterior component have the same texture.

In this embodiment, the hairline patterns formed of the STS material are disposed on the base in order to realize the texture of the metal material, e.g., the STS material. The colored layer is disposed on the base including the hairline patterns using the pigment having the STS texture or the coating film. The protection layer is disposed in order to protect the colored layer.

## Claims

1. A refrigerator door (120) with an exterior component, the exterior component being installed on the refrigerator door (120) to define the exterior of the refrigerator door (120), the refrigerator door comprising:
a first exterior component formed of a metal material and defining one portion of the exterior of the refrigerator door;
a dispenser (200) installed in a dispenser mounting part (160) provided in the refrigerator door (120);
a second exterior component formed of a plastic material and defining the exterior of the dispenser (200) and the second exterior component having the same surface pattern as that of the first exterior component;
wherein said dispenser (200) comprises:
a rear bracket (230) configured to provide a space for dispensing water or ice,
a dispenser frame (210) disposed in a front direction of the rear bracket (230) to define the exterior of the dispenser (200),
an electronic part (250) disposed in a rear direction of the dispenser frame (210), and
an electronic part cover (252) configured to protect said electronic part (250);
wherein the rear bracket (230) comprises:
a push button (220) configured to dispense water or ice when pushed by a user, and
a gutter mounting part (232) and a gutter (240), wherein said gutter (240) is installed within the gutter mounting part (232) and configured to collect the water or ice;
wherein the second exterior component comprises:
a base (320) on which the surface pattern is processed, and
a colored layer (340) provided on the surface of the base (320) and the colored layer (340) being fabricated using a plating or deposition process and having the same color tone as that of the first exterior component,
wherein the surface pattern of the base (320) comprises a hairline pattern (322) which has the same texture as the first exterior component and the surface pattern (322) is disposed on a portion constituting the exterior of the base (320),
wherein the second exterior component is installed on the first exterior component, and wherein the second exterior component and the first exterior component have the same texture.

2. The refrigerator door (120) with an exterior component according to claim 1, wherein the base (320) is fabricated using an injection molding technology.

## Patentansprüche

1. Kühlschranktür (120) mit einer Außenkomponente, wobei die Außenkomponente auf der Kühlschranktür (120) installiert ist, um die Außenseite der Kühlschranktür (120) zu definieren, wobei die Kühlschranktür umfasst:
eine erste Außenkomponente, die aus einem Metallmaterial gebildet ist und einen Abschnitt der Außenseite der Kühlschranktür definiert;
einen Spender (200), der in einem Spendermontageteil (160) installiert ist, das in der Kühlschranktür (120) bereitgestellt ist;
eine zweite Außenkomponente, die aus einem Kunststoffmaterial gebildet ist und die Außenseite des Spenders (200) definiert, und wobei die zweite Außenkomponente das gleiche Oberflächenmuster wie jenes der ersten Außenkomponente aufweist;
wobei der Spender (200) umfasst:
eine hintere Halterung (230), die ausgestaltet ist, einen Raum zur Abgabe von Wasser oder Eis bereitzustellen,
einen Spenderrahmen (210), der in einer vorderen Richtung der hinteren Halterung (230) angeordnet ist, um die Außenseite des Spenders (200) zu definieren,
ein Elektronikteil (250), das in einer hinteren Richtung des Spenderrahmens (210) angeordnet ist, und
eine Elektronikteilabdeckung (252), die ausgestaltet ist, das Elektronikteil (250) zu schützen;
wobei die hintere Halterung (230) umfasst:
einen Druckknopf (220), der ausgestaltet ist, Wasser oder Eis abzugeben, wenn er von einem Benutzer gedrückt wird,
ein Tropfrinnenmontageteil (232) und eine Tropfrinne (240), wobei die Tropfrinne (240) innerhalb des Tropfrinnenmontageteils (232) installiert und ausgestaltet ist, das Wasser oder Eis zu sammeln;
wobei die zweite Außenkomponente umfasst:
eine Grundplatte (320), auf der das Oberflächenmuster bearbeitet wird, und
eine Farbschicht (340), die auf der Oberfläche der Grundplatte (320) bereitgestellt wird, und wobei die Farbschicht (340) durch Anwenden eines Plattierungs- oder Ablagerungsverfahrens hergestellt wird und den gleichen Farbton wie jener der ersten Außenkomponente aufweist,
wobei das Oberflächenmuster der Grundplatte (320) ein Haarlinienmuster (322) umfasst, das die gleiche Textur wie die erste Außenkomponente aufweist und das Oberflächenmuster (322) auf einem Abschnitt angeordnet ist, der die Außenseite der Grundplatte (320) bildet,
wobei die zweite Außenkomponente auf der ersten Außenkomponente installiert ist, und wobei die zweite Außenkomponente und die erste Außenkomponente die gleiche Textur aufweisen.

2. Kühlschranktür (120) mit einer Außenkomponente nach Anspruch 1, wobei die Grundplatte (320) durch Anwenden einer Spritzgießtechnologie hergestellt wird.

## Revendications

1. Porte de réfrigérateur (120) avec un composant extérieur, le composant extérieur étant installé sur la porte de réfrigérateur (120) pour définir l'extérieur de la porte de réfrigérateur (120), la porte de réfrigérateur comprenant :
un premier composant extérieur constitué d'un matériau métallique et définissant une portion de l'extérieur de la porte de réfrigérateur ;
un distributeur (200) installé dans une partie de montage de distributeur (160) prévue dans la porte de réfrigérateur (120) ;
un second composant extérieur constitué d'un matériau plastique et définissant l'extérieur du distributeur (200) et le second composant extérieur présentant le même motif de surface que celui du premier composant extérieur ;
dans laquelle ledit distributeur (200) comprend :
un support arrière (230) configuré pour fournir un espace pour distribuer de l'eau ou des glaçons,
un cadre de distributeur (210) disposé dans une direction avant du support arrière (230) pour définir l'extérieur du distributeur (200),
une partie électronique (250) disposée dans une direction arrière du cadre de distributeur (210), et
un couvercle de partie électronique (252) configuré pour protéger ladite partie électronique (250) ;
dans laquelle le support arrière (230) comprend :
un bouton-poussoir (220) configuré pour distribuer de l'eau ou des glaçons lorsqu'il est poussé par un utilisateur, et
une partie de montage de goulotte (232) et une goulotte (240), dans laquelle ladite goulotte (240) est installée à l'intérieur de la partie de montage de goulotte (232) et configurée pour collecter l'eau ou les glaçons ;
dans laquelle le second composant extérieur comprend :
une base (320) sur laquelle le motif de surface est traité, et
une couche de couleur (340) prévue sur la surface de la base (320) et la couche de couleur (340) étant fabriquée en utilisant un processus de placage ou de dépôt et présentant le même ton de couleur que celui du premier composant extérieur,
dans laquelle le motif de surface de la base (320) comprend un motif de délié (322) qui présente la même texture que celle du premier composant extérieur et le motif de surface (322) est disposé sur une portion constituant l'extérieur de la base (320),
dans laquelle le second composant extérieur est installé sur le premier composant extérieur, et
dans laquelle le second composant extérieur et le premier composant extérieur ont la même texture.

2. Porte de réfrigérateur (120) avec un composant extérieur selon la revendication 1, dans laquelle la base (320) est fabriquée en utilisant une technologie de moulage par injection.
